# FASCICULE DE BREVET EUROPEEN

(11) **EP 3 155 823 B1**
(45) Date de publication et mention de la délivrance du brevet: **20.05.2020**
(21) Numéro de dépôt: 15733832.8
(22) Date de dépôt: 15.06.2015
(51) Int. Cl.: H04N 21/647, H04N 21/24, H04N 21/262, H04L 29/06, H04W 36/14, H04L 12/811

(54) **GESTION PAR UN ÉQUIPEMENT INTERMÉDIAIRE DE LA QUALITÉ DE TRANSMISSION D'UN FLUX DE DONNÉES VERS UN TERMINAL MOBILE**
VERWALTUNG DER ÜBERTRAGUNGSQUALITÄT EINES DATENSTROMES AN EIN MOBILFUNKENDGERÄT ÜBER EINE ZWISCHENVORRICHTUNG
MANAGEMENT, BY AN INTERMEDIATE DEVICE, OF THE QUALITY OF TRANSMISSION OF A DATA STREAM TO A MOBILE TERMINAL

(30) Priorité: 16.06.2014 FR 1455483
(43) Date de publication de la demande: 19.04.2017
(73) Titulaire: Orange, 75015 Paris (FR)
(72) Inventeur: IBRAHIM, Ghida, 1072 ML Amsterdam (NL)
(86) Numéro de dépôt international: PCT/FR2015/051574
(87) Numéro de publication internationale: WO 2015/193597

(56) Documents cités:
- EP-A1- 2 557 753
- WO-A1-2013/085279
- WO-A2-2013/057315
- US-A1- 2012 250 509
- JANNE TERVONEN: "Deliverable DA2.2.23 Policy and Charging Control Functionality with WLAN and PBRM", INTERNET CITATION, 22 décembre 2010 (2010-12-22), pages 1-25, XP002696450, Extrait de l'Internet: URL:http://www.futureinternet.fi/publicati ons/ICT_SHOK_FI_Phase2_DA2.2.23_10.pdf [extrait le 2013-05-02]
- "3rd Generation Partnership Project; Technical Specification Group Services and System Aspects; Study on system enhancements for user plane congestion management (Release 13)", 3GPP STANDARD; 3GPP TR 23.705, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.11.0, 3 juin 2014 (2014-06-03), pages 1-64, XP050773886,
- CYGNUS BROADBAND: "Discussion paper on handling of video traffic", 3GPP DRAFT; S2-131740, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Busan, South Korea; 20130527 - 20130531 21 mai 2013 (2013-05-21), XP050708926, Extrait de l'Internet: URL:http://www.3gpp.org/ftp/tsg_sa/WG2_Arc h/TSGS2_97_Busan/Docs/ [extrait le 2013-05-21]
- "3rd Generation Partnership Project; Technical Specification Group Services and System Aspects; Packet-switched Streaming Service (PSS); Improved Support for Dynamic Adaptive Streaming over HTTP in 3GPP (Release 12)", 3GPP STANDARD; 3GPP TR 26.938, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. V1.6.0, 1 avril 2014 (2014-04-01), pages 1-78, XP050770111,

## Description

La présente invention concerne le domaine de la transmission de flux de données multimédia dans un réseau de communication, et plus particulièrement celui de l'optimisation de la qualité d'expérience d'un utilisateur lorsqu'un tel flux de données est reçu.

La consommation de contenus multimédia sur le réseau internet est en constante augmentation depuis des années. En particulier, la consommation de contenus vidéos devrait constituer 90 % du trafic internet en 2017. Dans ce trafic de contenus vidéos, on estime à 35 % celui qui sera généré par les terminaux mobiles en 2015, ce pourcentage devant augmenter à 50 % à l'horizon 2017.

Contrairement aux utilisateurs accédant à internet via un réseau d'accès fixe, les utilisateurs de terminaux mobiles peuvent changer de zone géographique (cellule) ou de type de réseau d'accès (Wifi ou réseau cellulaire) durant une session vidéo, ce qui induit des fluctuations importantes de bande passante au niveau du réseau d'accès radio (RAN).

Or, d'une part, la qualité d'expérience (QoE en anglais) perçue par un utilisateur final accédant par son terminal mobile à un contenu multimédia, typiquement via le réseau internet, est un paramètre essentiel. Cette qualité d'expérience, notamment lorsque cet utilisateur final consomme des contenus vidéos sur internet, dépend de la résolution du contenu vidéo, elle-même dépendant du débit d'encodage du flux vidéo consommé ainsi que des événements de « buffering » subis par l'utilisateur final, dépendant de l'adéquation entre le débit d'encodage d'une vidéo et de son débit de transmission.

D'autre part, certains fournisseurs de contenus disposent de leurs propres réseaux de distribution de contenus (CDN) consistant en des serveurs hébergés dans les domaines d'opérateurs de télécommunications ou connectés au travers de liens de pair à pair aux réseaux de ces opérateurs (e.g. Netflix, YouTube). D'autres fournisseurs de contenus ont choisi de déléguer la distribution de leurs contenus multimédias à des acteurs spécialisés dans la distribution de contenus, avec leurs propres réseaux CDN (e.g. Akamai, Limelight), également interconnectés avec les réseaux des opérateurs. Finalement, certains opérateurs de télécommunications déploient des réseaux CDNs (Telco-CDNs) en mode overlay dans les pays où ils sont présents et commencent, de ce fait, à attirer des fournisseurs de contenus qui veulent pousser leurs contenus au plus proche des utilisateurs.

Dans tous ces cas de figure, il existe un besoin d'optimiser la qualité de service de bout en bout pour des sessions multimédia initiées par un abonné mobile d'un opérateur de télécommunications pour accéder à des contenus multimédias, vidéos en particulier, proposés par un fournisseur de contenu via un réseau de distribution de contenus. Ceci afin de proposer à cet abonné la meilleure qualité d'expérience possible.

Afin d'améliorer la qualité d'expérience d'un utilisateur accédant à un contenu vidéo, il existe déjà une technique connue sous le nom de « http adaptive streaming », destinée à fonctionner efficacement sur des réseaux utilisant le protocole http, tel que le réseau internet.

Cette technique « http adaptive streaming » repose sur l'utilisation, coté plateforme de distribution de contenu CDN, d'un encodeur pouvant encoder le contenu à diffuser selon plusieurs débits d'encodage correspondant à des résolutions différentes du même contenu. Chaque flux est divisé en une multitude de paquets de données, habituellement regroupés sous la forme de segments de données (« chunks » en anglais) dont la longueur correspond à une durée de contenu variant habituellement entre deux et dix secondes.

Le terminal client a connaissance des différents flux disponibles pour un contenu multimedia donné, avec leurs différents débit d'encodage, au moyen d'un fichier (communément appelé « manifest file ») qu'il reçoit du fournisseur de contenu au moment où le contenu est demandé, ce fichier listant l'ensemble des segments du contenu selon les différentes résolutions d'encodage disponibles. Au démarrage, le terminal client demande toujours le premier segment avec le plus faible débit d'encodage. Si, lors de la réception de ce premier segment, le terminal client constate que le débit de réception est supérieur à ce débit d'encodage, il requiert le segment suivant selon le débit d'encodage directement supérieur au débit précédemment utilisé. Plus tard, si le terminal client constate que le débit de réception est inférieur au débit d'encodage lors de la réception d'un paquet, il requiert le segment suivant selon le débit d'encodage directement inférieur au débit précédemment utilisé.

Cette technique « http adaptive streaming » permet ainsi de limiter les problèmes de « buffering » et d'accélérer le temps initial de restitution du contenu, ce qui améliore la qualité d'expérience des utilisateurs. Outre différentes versions propriétaires (HTTP Smooth Streaming de Microsoft, HTTP Live Streaming d'Adobe), cette technique a débouché sur une solution normalisée, « MPEG DASH », permettant à des équipements divers de recevoir des contenus dans diverses conditions de réception.

La solution technique « MPEG DASH », ainsi que les autres techniques « http adaptive streaming » existantes de manière générale, présentent cependant un certain nombre d'inconvénients.

Ainsi, la résolution (i.e. le débit d'encodage) sélectionnée à un moment donné pour un contenu n'est pas toujours la meilleure résolution pouvant être fournie à l'utilisateur par le réseau. C'est en particulier le cas pour le premier segment qui est systématiquement transmis avec la résolution la plus basse même si les ressources réseaux permettaient la transmission d'un premier segment avec une plus grande résolution. Cela peut être aussi le cas pour le segment suivant qui, dans les meilleurs des cas, ne peut être encodé qu'avec une résolution directement supérieure à la résolution la plus basse possible, et ainsi de suite. En d'autres termes, lors du moment crucial d'engagement d'un client en termes de qualité d'expérience que constituent les premiers segments de données reçus, la qualité d'encodage du contenu est bridée par rapport à ce qu'elle pourrait être, notamment dans des réseaux offrant de bonnes conditions de transmission.

En outre, la sélection de la résolution n'est pas basée sur une vision en temps réel du réseau, mais plutôt sur des heuristiques mesurées par le logiciel restituant le contenu requis de l'utilisateur sur son terminal. Ces heuristiques sont sujets à des défaillances au niveau du terminal lui-même et à des défauts dans la méthode de mesure adoptée. En particulier, ces heuristiques ne reflètent pas nécessairement le vrai état du réseau d'accès et du réseau cœur. Enfin, l'abaissement de la résolution d'un contenu n'a lieu qu'après qu'une dégradation des conditions réseau soit ressentie par l'utilisateur, ce qui impacte sa qualité d'expérience et donc sa fidélité.

Il existe certes une variante dans laquelle le fichier « manifest file » peut être modifié par l'opérateur du réseau pour retirer certains débits d'encodage qui ne pourraient pas être supportés par le réseau, compte tenu des ressources réseaux, afin d'empêcher le terminal client de sélectionner de tels débits.

Cependant, cette variante ne permet pas de résoudre complètement les problèmes évoqués précédemment, et présente d'autres inconvénients. D'une part, l'efficacité de cette variante dépend principalement de la fréquence de mise à jour du fichier « manifest file » par le fournisseur du contenu. Dans la mesure où cette fréquence de mise à jour dépend du serveur fournissant le contenu et de l'utilisateur final, une adaptation de la résolution à l'échelle du segment ne peut être garantie. De plus, les fichiers « manifest file » étant envoyés au terminal client par le fournisseur de contenus, ils doivent être détectés et interceptés par l'opérateur du réseau pour pouvoir être modifiés, ce qui nécessite l'utilisation de techniques complexes et couteuses d'inspection profonde de paquets (DPI en anglais) dans le réseau. En particulier, une inspection systématique de chaque paquet transmis s'avère nécessaire pour identifier des fichiers « manifest file » correspondant à des utilisateurs spécifiques et/ou des fournisseurs de contenus bien spécifiques, ce qui complexifie et engendre de fortes contraintes pour le réseau.

La présente invention a pour objet de remédier aux inconvénients précités.

Elle propose à cet effet un procédé de transmission d'un contenu numérique, composé d'une pluralité de paquets de données, vers un terminal mobile au travers d'un réseau de communication, le procédé comprenant les étapes suivantes mises en œuvre par un équipement de gestion :
- obtenir, auprès d'un nœud d'application de règles de qualité de service du réseau de communication, au moins une information relative à la bande passante disponible sur au moins un lien réseau au moyen duquel le terminal est attaché au réseau de communication ;
- sélectionner, en fonction de cette information relative à la bande passante, un débit d'encodage à utiliser pour au moins un des paquets de données ; et
- envoyer, à un équipement destiné à fournir le contenu numérique, un message indiquant le débit d'encodage sélectionné, afin d'instruire à cet équipement destiné à fournir le contenu numérique de transmettre au terminal mobile au moins un des paquets de données, encodé avec le débit d'encodage sélectionné, sur un des liens réseaux.

Il est ainsi possible d'adapter la qualité d'encodage du contenu transmis, au niveau du fournisseur ou du distributeur de ce contenu, en fonction de la bande passante allouée par le réseau au terminal mobile, et donc d'optimiser la qualité de service de bout en bout pour la transmission du contenu, afin d'éviter notamment des événements de « Buffering » impactant la qualité d'expérience de l'utilisateur requérant le contenu.

Selon une caractéristique avantageuse, le procédé comprend en outre :
- déterminer, en fonction du débit d'encodage sélectionné, une règle de qualité de service à appliquer au lien réseau sur lequel le au moins un paquet de données encodé avec le débit d'encodage sélectionné est à transmettre ; et
- envoyer cette règle de qualité de service vers un nœud d'application de règles de qualité de service du réseau de communication, afin de déclencher l'envoi, de ce nœud d'application de règles de qualité de service à une passerelle d'accès réseau, d'au moins un paramètre de qualité de service, déduit à partir de la règle de qualité de service, à appliquer au lien réseau sur lequel le au moins un paquet de données encodé avec le débit d'encodage sélectionné est à transmettre.

Cela permet de garantir une certaine qualité de la transmission en fonction de la qualité de résolution choisie pour le contenu numérique en allouant les ressources, en termes de bande passante, associées à une résolution donnée du contenu au niveau du réseau d'accès et du réseau cœur formant le réseau de communication.

Dans un mode de réalisation avantageux, le au moins un paquet encodé avec le débit d'encodage sélectionné est un segment de données comprenant le premier paquet de données de ce contenu, les étapes du procédé étant mises en œuvre par l'équipement de gestion suite à la réception d'une requête de fourniture du contenu provenant du terminal mobile. Ceci permet d'offrir à l'utilisateur une qualité d'expérience optimale dès le début de la réception du contenu requis, plutôt qu'au bout d'un temps qui peut être plus ou moins long, et ainsi d'augmenter le taux de fidélisation des clients au service proposant ce contenu.

Dans un mode de réalisation particulier, le procédé comprend en outre l'obtention par l'équipement de gestion d'un fichier de résolution auprès de l'équipement destiné à fournir le contenu numérique, ce fichier de résolution indiquant une pluralité de débits d'encodage disponibles pour les paquets du contenu numérique, le débit d'encodage à utiliser étant sélectionné parmi la pluralité de débits d'encodage disponibles. Ceci permet à l'équipement de gestion de sélectionner dynamiquement et simplement la résolution du contenu, tout en optimisant la qualité de bout en bout.

Dans un autre mode de réalisation, l'étape d'obtention consiste à obtenir, auprès d'un serveur de découverte et de sélection de réseau d'accès du réseau de communication, une pluralité d'informations relatives aux bandes passantes disponibles pour une pluralité de liens réseaux du réseau vers le terminal, le procédé comprend en outre la sélection, parmi lesdits liens réseaux, du lien réseau présentant la bande passante disponible la plus élevée, et l'étape de sélection du débit d'encodage consiste à sélectionner, parmi un ensemble de débits d'encodage disponibles pour le contenu numérique, le débit d'encodage le plus élevé qui soit inférieur à la bande passante disponible du lien réseau sélectionné.

Il est ainsi possible d'améliorer la gestion de la qualité de bout en bout de la transmission du contenu, en permettant le choix entre plusieurs liens réseaux afin d'offrir la meilleure résolution de contenu numérique à l'utilisateur.

Selon une caractéristique particulière, lorsque le lien réseau sélectionné est un lien réseau au moyen duquel le terminal mobile n'est pas attaché au réseau mobile, le procédé comprend en outre l'envoi, au serveur de découverte et de sélection de réseau d'accès, d'une instruction de déclenchement d'une procédure d'attachement au moyen du lien réseau sélectionné entre le terminal mobile et une passerelle d'accès réseau du réseau de communication.

Il est alors possible d'optimiser la gestion de la qualité de bout en bout de la transmission du contenu, en activant au besoin un lien réseau pour lequel le terminal n'est pas en cours d'attachement si ce lien réseau permet d'offrir la meilleure résolution de contenu numérique à l'utilisateur.

Selon un mode de réalisation, le message envoyé à l'équipement destiné à fournir le contenu numérique est une requête d'envoi au terminal mobile d'au moins un des paquets de données, encodé avec le débit d'encodage sélectionné, sur un des liens réseaux. Cela permet une gestion transparente pour l'utilisateur de la résolution du contenu numérique transmis, entièrement implémentée au niveau de l'équipement de gestion.

Selon un autre mode de réalisation, le message envoyé à l'équipement destiné à fournir le contenu numérique est une requête de sélection d'au moins un paquet de données encodé avec le débit d'encodage sélectionné lorsque l'équipement destiné à fournir le contenu numérique reçoit du terminal mobile une requête de transmission du paquet de données, le procédé comprenant en outre l'envoi, de l'équipement de gestion au terminal mobile, d'un message instruisant de rediriger une requête de transmission de paquets de données du terminal mobile vers l'équipement destiné à fournir le contenu numérique. Cet autre mode de réalisation permet une gestion de la qualité de bout en bout de la transmission du contenu impliquant le terminal mobile.

Selon un autre aspect de l'invention, il est proposé un équipement de gestion de transmission d'un contenu numérique composé d'une pluralité de paquets de données vers un terminal mobile, au travers d'un réseau de communication, comprenant :
un module de communication apte à obtenir, auprès d'un nœud d'application de règles de qualité de service du réseau de communication,
au moins une information relative à la bande passante disponible sur au moins un lien réseau au moyen duquel le terminal est attaché au réseau de communication, et configuré pour envoyer, à un équipement destiné à fournir le contenu numérique, un message indiquant un débit d'encodage à utiliser pour au moins un des paquets de données, afin d'instruire à cet équipement destiné à fournir le contenu numérique de transmettre au terminal mobile au moins un des paquets de données, encodé avec le débit d'encodage sélectionné, sur un des liens réseaux ; et
un module de traitement configuré pour sélectionner, en fonction de cette information relative à la bande passante, le débit d'encodage à utiliser pour le au moins un paquet de données.

Il est aussi proposé un programme d'ordinateur comprenant des instructions de code destinées à la mise en œuvre des étapes du procédé ci-avant, lorsque ce programme d'ordinateur est exécuté par les moyens de traitement d'un équipement de gestion de transmission d'un contenu numérique. Il est enfin également proposé un support d'enregistrement, lisible par un équipement de gestion de transmission d'un contenu numérique, sur lequel est enregistré un tel programme d'ordinateur.

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
- la figure 1 illustre un système de télécommunications permettant la gestion de la qualité de la transmission d'un contenu numérique par un équipement de gestion intermédiaire ;
- la figure 2 illustre un procédé de transmission d'un contenu numérique vers un terminal mobile selon un premier mode de réalisation de l'invention ;
- la figure 3 illustre d'autres aspects du procédé de transmission d'un contenu numérique vers un terminal mobile selon ce premier mode de réalisation ;
- la figure 4 illustre un procédé de transmission d'un contenu numérique vers un terminal mobile selon un deuxième mode de réalisation de l'invention ;
- la figure 5 illustre d'autres aspects du procédé de transmission d'un contenu numérique vers un terminal mobile selon ce deuxième mode de réalisation ; et
- la figure 6 illustre schématiquement un équipement de gestion de transmission d'un contenu numérique selon un mode de réalisation de l'invention.

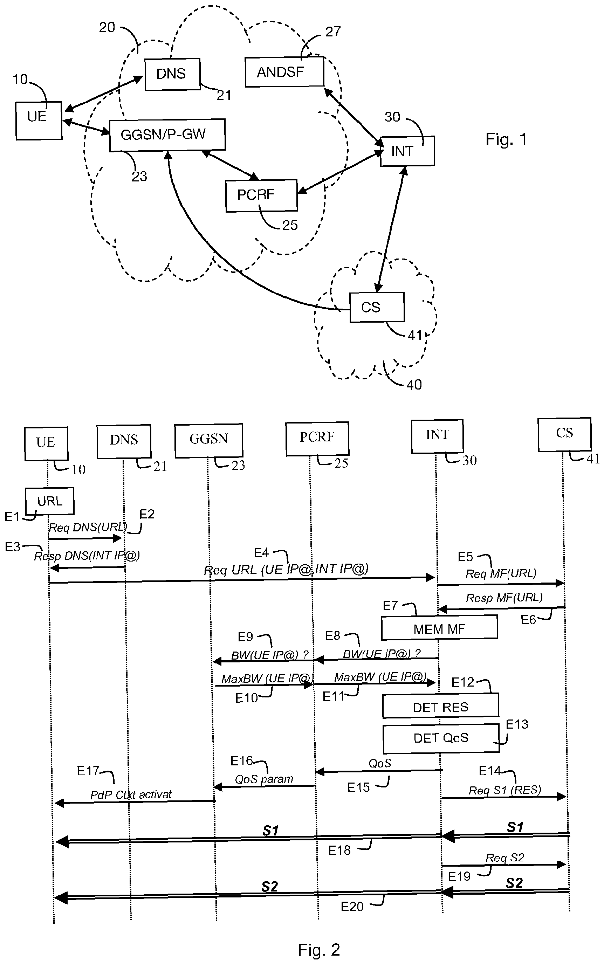

On se réfère tout d'abord à la figure 1 illustrant un système de télécommunications permettant la gestion de la qualité de la transmission d'un contenu numérique par un équipement de gestion intermédiaire.

Dans ce système, un terminal mobile 10 (e.g. téléphone mobile, smartphone, tablette ou encore ordinateur portable avec une interface radio...) peut recevoir des flux de données correspondant à des contenus numériques multimédias (e.g. audio ou vidéo) ou des services en provenance d'un équipement 41 destiné à fournir de tels contenus, cet équipement 41 appartenant à un fournisseur de contenus (par exemple YouTube ou DailyMotion) ou à un distributeur de contenus (CDN provider en anglais, par exemple Akamai ou Limelight) 40. Cet équipement 41 est typiquement implémenté sous la forme d'un serveur stockant des contenus multimédias, ou gérant l'accès à un autre équipement stockant ces contenus.

Pour accéder à ces contenus ou services, le terminal mobile 10 interagit avec le réseau de télécommunications 20 (typiquement le réseau de l'opérateur de télécommunications auquel l'utilisateur du terminal 10 est abonné) afin de recevoir les flux de données correspondant au contenu requis par l'utilisateur.

Ce réseau de télécommunications 20 comprend un (voire plusieurs) réseau d'accès mobile ainsi qu'un réseau cœur dans lequel, entre autres équipements, les équipements suivants sont utilisés dans le contexte de la présente invention :
- Une passerelle d'accès réseau 23, permettant l'interaction entre le réseau 20 et des réseaux à commutation par paquets externes (tel que le réseau internet) et le routage des paquets de données entre le terminal 10 et ces réseaux externes. Cette passerelle d'accès réseau 23 est typiquement un nœud GGSN dans le cas d'un réseau cœur de type GPRS associé à des réseaux d'accès 2G ou 3G, ou une passerelle P-GW dans le cas d'un réseau cœur de type EPC associé à des réseau d'accès 4G/LTE.

Cette passerelle 23 permet ainsi au terminal 10 de recevoir des données provenant de réseaux externes, au moyen d'un lien réseau établi entre cette passerelle 23 et le terminal 10 au travers du réseau cœur ainsi que du réseau d'accès auquel le terminal 10 est attaché via un point d'accès ou une station de base. Dans le cas où le réseau 20 propose plusieurs réseaux d'accès différents au terminal 10, ce terminal 10 peut être connecté à la passerelle 23 via ces différents réseaux d'accès, au moyen de plusieurs liens réseaux entre le terminal 10 et la passerelle 23 (i.e. un lien réseau par réseau d'accès distinct).
- Un nœud d'application de règles de qualité de service 25, permettant notamment l'application de niveaux de qualité de service prédéfinis (QoS) dans le réseau 20. Ce nœud 25 est typiquement un nœud PCRF du réseau 20, i.e. un équipement du réseau implémentant la fonction PCRF telle que proposée dans le standard 3GPP TS 23.203.

En outre, ce réseau de télécommunications 20 peut comprendre les équipements suivants pouvant être avantageusement utilisés, selon les cas, dans le contexte de la présente invention :
- Un serveur de résolution d'adresses 21 (typiquement un serveur DNS) permettant au réseau 20 de fournir au terminal 10 requérant l'accès à un contenu ou un service au moyen d'une adresse internet (e.g. URL), l'adresse IP de l'équipement capable de fournir ce contenu ou ce service.
- Un serveur de découverte et de sélection de réseau d'accès 27, permettant au terminal 10 de découvrir les réseaux d'accès auxquels il peut accéder et capable de fournir à ce terminal 10 des règles de préférence en termes de connexion aux différents accès et de routage des différents flux (données, voix, vidéo) via ces accès. Dans le cadre d'un réseau cœur 4G (EPC), ce serveur 27 est typiquement un serveur ANDSF (Access Network Discovery and Selection Function) tel que décrit dans le standard 3GPP TS 24.312

Pour mettre en œuvre le procédé selon l'invention, le réseau 20 interagit avec l'équipement 41 par l'intermédiaire d'un équipement de gestion intermédiaire 30, typiquement implémenté sous la forme d'un serveur, qui se place comme un tiers de confiance entre l'opérateur du réseau 20 et le fournisseur/distributeur de contenus 40.

Pour ce faire, l'opérateur du réseau 20 et le fournisseur/distributeur de contenus 40 (si l'opérateur réseau n'est pas lui-même distributeur de contenus) peuvent ouvrir l'accès à certaines de leurs fonctionnalités à cet équipement 30, au travers d'interfaces de programmation spécifiques (network API), afin que cet équipement 30 puisse obtenir un certain nombre d'informations, aussi bien du côté du réseau 20 que du côté du fournisseur/distributeur de contenus 40, et envoyer des instructions à ces derniers lorsque nécessaire pour gérer la qualité de transmission d'un contenu. Cet équipement de gestion intermédiaire 30 devient ainsi un orchestrateur du plan de contrôle de l'opérateur. Il interagit avec l'équipement 41 et supervise de manière dynamique les réseaux d'accès et cœur de l'opérateur de télécommunications, afin d'optimiser la livraison d'un contenu.

On se réfère maintenant à la **figure** 2 qui illustre un procédé de transmission d'un contenu numérique vers un terminal mobile selon un premier mode de réalisation.

Dans ce premier mode de réalisation, on considère un cas générique où le terminal 10 est attaché via un ou plusieurs réseaux d'accès à une passerelle d'accès réseau 23 (la figure 2 illustrant le cas particulier d'un attachement par un seul lien réseau, par souci de simplicité, sans que l'invention ne se limite à ce seul cas particulier), cette passerelle pouvant être une passerelle GGSN appartenant à un réseau cœur 2G/3G (GPRS), comme illustré sur la figure 2, ou une passerelle P-GW appartenant à un réseau cœur 4G (EPC).

Le procédé est déclenché (étape E1) par un utilisateur lorsqu'il requiert sur son terminal 10 l'accès à un contenu C1 proposé par le fournisseur 40, typiquement en indiquant l'adresse internet (URL) de ce contenu C1 dans un navigateur internet installé sur ce terminal 10 (par exemple « www.youtube.com/C1 »). Un tel contenu C1 est mis à disposition, par un équipement 41 du fournisseur/distributeur de contenu 40, sous la forme d'une succession de paquets de données P1,P2,..., de sorte à permettre la transmission du contenu C1 dans un réseau de communication par paquets. Ces paquets de données du contenu C1 peuvent être rassemblés en segments (« chunks ») de données S1,S2,..., d'une durée perceptible par l'utilisateur (typiquement de l'ordre de quelques secondes), notamment lorsqu'il s'agit de transmettre le contenu C1 par segments dans un mode de diffusion de type « streaming », ce qui est le cas illustré par la suite sur cette figure 2.

Le terminal 10 est alors aiguillé vers l'entité de gestion 30, par exemple au moyen d'un serveur de résolution d'adresses 21 du réseau 20, dans lequel l'adresse IP de l'entité de gestion 30 a été associée à un certain nombre d'URLs appartenant à des fournisseurs/distributeurs de contenus, ayant par exemple souscrit au préalable à un service de gestion de la qualité de service auprès de l'équipement de gestion intermédiaire 30.

Pour ce faire, le terminal 10 requiert de manière classique, auprès du serveur de résolution d'adresses 21, la traduction de cette adresse internet en une adresse IP, en envoyant à ce serveur 21 une requête de résolution d'adresse (étape E2) contenant l'adresse internet du contenu C1. Le serveur 21 répond à cette requête en retournant (étape E3) au terminal 10, non pas l'adresse IP d'un équipement du fournisseur de contenus 40, mais l'adresse IP de l'équipement de gestion intermédiaire 30 (désignée par INT IP@), afin que cet équipement puisse prendre en charge la gestion de livraison du contenu C1 requis.

Une fois muni de l'adresse IP de l'équipement 30, le terminal utilise cette adresse IP pour envoyer (étape E4) à cet équipement 30 une requête d'obtention du contenu requis par l'utilisateur, cette requête comprenant notamment un identifiant de ce contenu, l'adresse IP source de cette requête (i.e. l'adresse IP attribuée au terminal 10 par le réseau 20 lors de son attachement, désignée par UE IP@) et l'adresse destinataire de cette requête (INT IP@). Cette requête peut être typiquement une requête http GET (par exemple sous la forme « http GET www.youtube.com/C1 ; source : UE IP@ ; destination : INT IP@ »).

Après avoir reçu cette requête, l'équipement de gestion intermédiaire 30 peut obtenir auprès du fournisseur/distributeur de contenus 40 un fichier MF, dit « fichier de résolution », listant les différents débits d'encodage proposés par le fournisseur/distributeur 40 pour ce contenu C1, si tant est que l'équipement 30 ne dispose pas déjà de ce fichier MF (ou s'il souhaite le mettre à jour, par exemple lorsqu'il dispose de ce fichier depuis un certain temps). Un tel fichier de résolution peut typiquement être un fichier de type « Manifest File », utilisé dans le streaming http adaptatif et destiné habituellement à être transmis directement au terminal mobile requérant le contenu. Pour ce faire, l'équipement 30 envoie (étape E5) à un équipement 41 appartenant au fournisseur/distributeur de contenu 40 concerné, apte à fournir le contenu C1, une requête identifiant le contenu C1 et visant à obtenir un fichier de résolution MF correspondant à ce contenu C1. L'équipement 41 répond à cette requête (étape E6) en transmettant à l'équipement 30 le fichier MF contenant les différentes résolutions disponibles pour ce contenu C1 en particulier.

Dans un format possible de ce fichier de résolution, chaque débit d'encodage disponible du contenu C1 est associé à une série d'adresses internet (URLs) particulières pointant vers les différents segments S1,S2... successifs du contenu C1 encodé dans ce format particulier.

Ainsi, pour un contenu C1 d'une durée de 40 secondes, divisé en quatre segments de données S1 à S4 de 10 secondes disponibles dans trois résolutions différentes, i.e. avec trois débits d'encodage 512kb/s, 1024 kb/s et 2048 kb/s, le fichier de résolution peut prendre la forme suivante :

| Contenu requis | Débit d'encodage | Adresse où récupérer le segment |
|---|---|---|
| C1 | 512 kb/s | S1 : www.youtube.com/C1/stream512/S1 |
| | | S2 : www.youtube.com/C1/stream512/S2 |
| | | S3 : www.youtube.com/C1/stream512/S3 |
| | | S4 : www.youtube.com/C1/stream512/S4 |
| | 1024 kb/s | S1 : wvvw.youtube.com/C1/stream1024/S1 |
| | | S2 : www.youtube.com/C1/stream1024/S2 |
| | | S3 : www.youtube.com/C1/stream1024/S3 |
| | | S4 : www.youtube.com/C1/stream1024/S4 |
| | 2048 kb/s | S1 : www.youtube.com/C1/stream2048/S1 |
| | | S2 : www.youtube.com/C1/stream2048/S2 |
| | | S3 : www.youtube.com/C1/stream2048/S3 |
| | | S4 : www.youtube.com/C1/stream2048/S4 |

Après avoir reçu ce fichier MF, l'équipement 30 mémorise ce fichier (étape E7).

L'équipement 30 envoie alors (étape E8), au nœud 25 d'application de règles de qualité de service du réseau 20, une requête visant à obtenir des informations relatives à la bande passante disponible sur le(s) lien(s) réseau(x) reliant le terminal 10 à la passerelle d'accès réseau 23 à laquelle il est attaché.

Dans la mesure où le nœud 25 ne dispose pas déjà de ces informations, il retransmet cette requête (éventuellement sous un format modifié) à la passerelle d'accès réseau 23 (étape E9). Sur réception de cette requête, la passerelle d'accès réseau 23 détermine la bande passante disponible sur le(s) lien(s) réseau(x) qui la relie au terminal 10, lorsqu'elle ne dispose pas déjà de cette information, et retourne un message de réponse contenant cette information (étape E10) au nœud 25. Une fois qu'il dispose de l'information relative à la bande passante sur le(s) lien(s) réseau entre le terminal 10 et la passerelle d'accès réseau 23, le nœud 25 transmet un message de réponse contenant cette information (étape E11) à l'équipement 30.

L'équipement 30 dispose alors des différents débits d'encodage disponibles pour les paquets formant le contenu C1, ainsi que de la bande passante disponible sur le(s) lien(s) réseau(x) vers le terminal 10. L'équipement 30 peut alors utiliser ces informations pour sélectionner (étape E12) le débit d'encodage RES (et donc la qualité de résolution du contenu C1) à utiliser en fonction de la bande passante disponible dans le réseau.

A ce stade du procédé, dans ce mode de réalisation, il s'agit de déterminer le débit d'encodage initial du flux de données correspondant au contenu C1, c'est-à-dire la résolution du premier segment de données S1 de ce flux (ce segment S1 comprenant les n premiers paquets du contenu C1) avant même que l'envoi de ce flux de données n'ait commencé, afin de fournir une qualité d'expérience optimale dès ce premier paquet.

Cette sélection peut consister en particulier à choisir, parmi tous les débits d'encodage disponibles, le plus haut débit d'encodage qui soit inférieur à la bande passante maximale disponible sur un lien réseau entre le terminal 10 et la passerelle d'accès réseau 23. Ainsi, avec les trois débits d'encodage 512kb/s, 1024 kb/s et 2048 kb/s, un seul lien réseau actif et une bande passante de 1500 kb/s disponible sur ce lien, c'est le deuxième débit d'encodage de 1024 kb/s (donc de qualité moyenne) qui est sélectionné.

Une fois le débit d'encodage sélectionné, l'équipement 30 envoie (étape E14) à l'équipement 41 une requête visant à déclencher l'envoi (étape E18), par le fournisseur de service 41, du premier segment S1, encodé avec le débit d'encodage sélectionné par l'équipement 30, du contenu C1 vers le terminal 10. L'envoi de ce segment S1 peut transiter par l'équipement de gestion 30 comme illustré sur la figure 2, lequel joue alors le rôle d'un proxy transparent pouvant avoir également pour rôle d'enrichir ou de comptabiliser les segments et/ou paquets transmis (dans un éventuel but de facturation), ou se faire directement via la passerelle d'accès réseau 23 sans transiter par l'équipement 30.

En outre, l'équipement 30 peut également déterminer (étape E13) une règle de qualité de service (désignée par QoS) à appliquer sur le lien réseau entre la passerelle d'accès réseau 23 et le terminal 10 lors de la transmission des paquets de données encodés avec le débit d'encodage sélectionné.

Cette règle de qualité de service peut notamment comprendre une instruction de réservation d'une bande passante allouée à la transmission de paquets encodés avec le débit d'encodage sélectionné, cette bande passante réservée étant déterminée en fonction du débit d'encodage sélectionné précédemment et de la bande passante disponible sur le lien réseau considéré. Ainsi, en reprenant le choix d'un débit d'encodage de 1024 kb/s pour un lien avec une bande passante disponible de 1500 kb/s, la règle peut instruire la réservation d'une bande passante correspondant au débit d'encodage (1024 kb/s), éventuellement augmentée d'une marge (e.g. 1100 kb/s). Cette règle de qualité de service peut aussi comprendre un identifiant de session, par exemple constitué de l'adresse IP du terminal 10 (e.g. l'adresse UE IP@) et l'URL du contenu requis (e.g. www.youtube.com/C1), afin de permettre à la passerelle d'accès réseau 23 d'identifier la session concernée pour laquelle il convient d'appliquer cette règle.

Une fois cette règle de qualité de service QoS déterminée, l'équipement 30 transmet une requête comprenant cette règle au nœud 25 d'application de règles de qualité de service (étape E15). Suite à la réception de cette règle de qualité de service à appliquer, le nœud 25 déclenche d'une part l'établissement d'un nouveau canal support dédié à la transmission du contenu C1 vers le terminal 10. Ce nouveau canal support est notamment un « PDP Context » dans le cas d'un réseau GPRS ou un « EPS Bearer » dans le cas d'un réseau 4G.

Le nœud 25 traduit d'autre part la règle de qualité de service à appliquer en un ensemble de paramètres de qualité de service à appliquer, sur ce nouveau canal support, lors de la transmission des paquets de données correspondant au contenu C1 et transmet (étape E16) un message comprenant ces paramètres à la passerelle d'accès réseau 23 (ici illustrée comme étant une passerelle GGSN, sans être limitée à ce seul cas), afin d'instruire à cette passerelle 23 de mettre en place (étape E17) le canal support en appliquant ces paramètres de qualité de service lors de la transmission des paquets du contenu C1. Ces paramètres sont par exemple le type ou la classe de trafic, le débit minimum garanti (GBR) pour le canal support dédié à la transmission du contenu C1 et le débit maximal (MBR) pour ce canal support. Dans l'exemple précédent, on peut considérer un débit garanti GBE égal au débit d'encodage sélectionné (1024 kb/s) et un débit maximal MBR égal à la bande passante allouée (1100 kb/s).

Par la suite, l'équipement 30 envoie une deuxième requête à l'adresse internet du fournisseur de service 41 correspondant au débit d'encodage RES choisi, afin de déclencher l'envoi du deuxième segment S2, toujours encodé avec ce même débit d'encodage RES, du contenu C1 vers le terminal 10. Et ainsi de suite, tant qu'aucune mise à jour des résolutions disponibles ou aucune modification des conditions de transmission dans le réseau n'a lieu, jusqu'au dernier segment du contenu C1.

Une fois la session de livraison du contenu C1 terminée, l'équipement 30 peut générer un fichier de données de facturation (CDR pour charging data record en anglais), ou enrichir un tel fichier déjà existant, avec certaines informations relatives à cette session, comme par exemple l'identifiant de la session (e.g. identifiant du terminal 10 et adresse internet du contenu C1), la durée de la session (en secondes) et la fréquence de mise à jour des règles de qualité de service (égale à 1 par exemple s'il n'y a eu qu'une seule mise à jour au début de cette session). Ce fichier de données de facturation peut alors être transmis, par exemple de manière mensuelle, à un équipement dédié à la facturation dans le réseau 20, afin que ce dernier puisse établir une facture sur la base de ces données et transmettre celle-ci au fournisseur/distributeur de contenus 40.

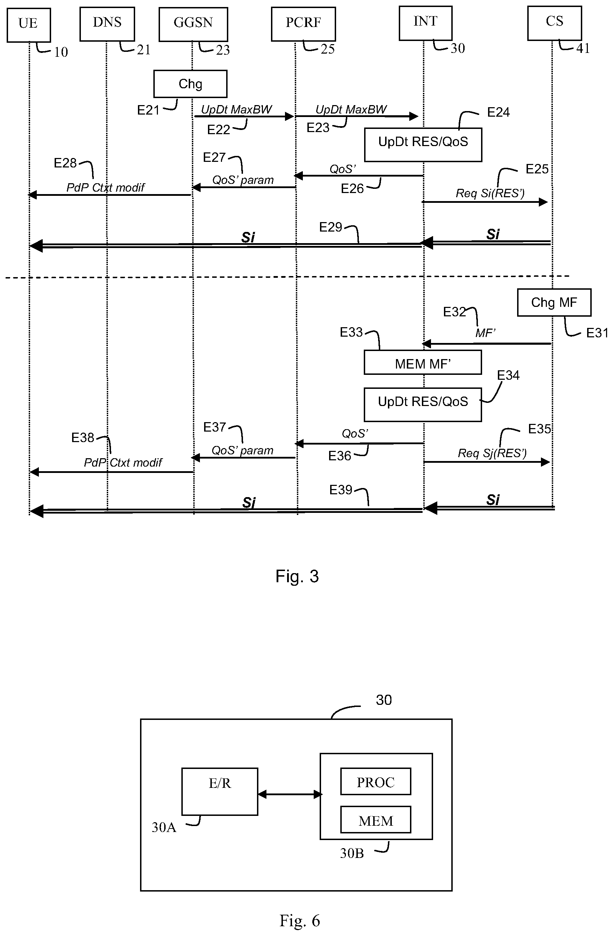

On se réfère maintenant à la **figure** 3 qui illustre d'autres aspects du procédé de transmission du contenu numérique C1 vers un terminal mobile selon le premier mode de réalisation.

On se place ici dans le cas où, certains segments de données du contenu C1 ayant déjà été transmis au terminal 10, un événement a lieu au niveau du réseau 20 qui entraîne une modification de la bande passante disponible sur le lien réseau servant à livrer le contenu C1 vers le terminal 10.

Cet événement est détecté par la passerelle d'accès réseau 23 (étape E21), laquelle détermine alors la bande passante disponible actualisée et transmet (étape E22) au nœud 25 un message de notification de mise à jour de la bande passante disponible, comprenant une information caractérisant cette bande passante disponible actualisée. Le nœud 25 retransmet (étape E23) ce message, éventuel dans un format modifié, à l'équipement de gestion 30.

Sur la base de cette bande passante actualisée, l'équipement 30 détermine (étape E24) le débit d'encodage à appliquer aux paquets suivants non encore transmis du contenu C1 (étape E24), lors d'un processus de mise à jour de cette bande passante.

En particulier, si la bande passante disponible actualisée est inférieure à la bande passante disponible considérée précédemment et ne permet plus la transmission de paquets encodé avec le débit d'encodage en cours d'application, l'équipement 30 sélectionne un débit d'encodage RES' plus faible (donc abaisse la qualité de la résolution du flux de données) compatible avec la bande passante actualisée (typiquement le débit d'encodage le plus élevé parmi les débits d'encodage disponibles inférieurs à la bande passante actualisée). Ainsi, avec les trois débits d'encodage disponibles 512 kb/s, 1024 kb/s et 2048 kb/s, si la bande passante disponible passe de 1500 kb/s à 700 kb/s, l'équipement 30 sélectionne un débit d'encodage actualisé RES' de 512 kb/s.

Inversement, si la bande passante actualisée a augmenté par rapport à la bande passante disponible précédemment, l'équipement 30 peut sélectionner un débit d'encodage plus élevé (et donc augmenter la qualité de résolution du flux de données) inférieur à la bande passante disponible actualisée. Ainsi, toujours avec les trois débits d'encodage disponibles 512 kb/s, 1024 kb/s et 2048 kb/s, si la bande passante disponible passe de 1500 kb/s à 3000 kb/s, l'équipement 30 sélectionne un débit d'encodage actualisé RES' de 2048 kb/s.

Dans la mesure où un nouveau débit d'encodage RES' a été sélectionné par l'équipement 30, ce dernier envoie une requête vers une URL correspondant à ce nouveau débit d'encodage (étape E25), afin de déclencher l'envoi vers le terminal 10 du segment de données suivant Si, encodé conformément à ce nouveau débit d'encodage RES' (étape E29).

Par ailleurs, lorsque le débit d'encodage est actualisé, l'équipement 30 peut aussi déterminer une règle actualisée de qualité de service QoS' à appliquer, sur le canal support dédié à la livraison du contenu C1 au terminal 10, aux segments non encore transmis de ce contenu, lors d'un processus de mise à jour de la qualité de service. L'équipement 30 transmet (étape E26) un message comprenant cette règle actualisée QoS' au nœud 25, lequel traduit cette règle actualisée en un ensemble de paramètres actualisés de qualité de service à appliquer, sur le canal support, lors de la transmission des paquets non encore transmis du contenu C1 et transmet (étape E27) un message comprenant ces paramètres actualisés vers la passerelle d'accès réseau 23, afin d'instruire à cette passerelle 23 de modifier (étape E28) le canal support déjà dédié à la livraison du contenu C1, en appliquant ces paramètres actualisés lors de la livraison de la suite du contenu C1.

Selon un autre aspect, l'équipement 41 peut envoyer (étape E32) à l'équipement 30 un fichier de résolution actualisé MF', suite à la modification de ce fichier (étape E31) par l'équipement 41, typiquement lors du retrait d'un débit d'encodage parmi les débits d'encodage disponibles pour le contenu C1 (par exemple suite à l'apparition d'une surcharge, et donc la dégradation du débit de transmission, de l'équipement 41 destiné à fournir le contenu C1 ou lorsque un débit d'encodage pour le contenu C1 n'est plus disponible au niveau de l'équipement 41), ou à l'inverse lors de l'ajout d'un débit d'encodage aux débits d'encodage disponibles pour le contenu C1 (par exemple suite à l'amélioration de la charge, et donc l'augmentation du débit de transmission, de l'équipement 41 destiné à fournir le contenu C1).

Dans ce cas, ce fichier MF' actualisé est mémorisé (étape E33) par l'équipement 30, et cet équipement 30 sélectionne (étape E34), sur la base de ce fichier actualisé MF', un débit d'encodage à appliquer aux segments non encore transmis du contenu C1, lors d'un processus de mise à jour du débit d'encodage.

En particulier, lorsque l'équipement 30 détermine qu'un nouveau débit d'encodage RES', plus élevé que celui en cours d'application, est devenu disponible dans le fichier actualisé MF' par rapport au fichier MF utilisé auparavant, et que celui-ci est inférieur à la bande passante disponible sur le lien réseau vers le terminal 10, alors l'équipement 30 sélectionne ce nouveau débit d'encodage pour augmenter la résolution du contenu transmis, et donc augmenter la qualité d'expérience de l'utilisateur. Inversement, si l'équipement 30 détermine que le débit d'encodage en cours d'utilisation n'est plus disponible dans le fichier actualisé, l'équipement 30 sélectionne alors un autre débit d'encodage correspondant au débit d'encodage le plus élevé, parmi les débits d'encodage encore disponibles indiqués dans le fichier actualisé, qui soit inférieur à la bande passante disponible, afin de minimiser la dégradation de la qualité d'expérience de l'utilisateur.

Dans la mesure où un nouveau débit d'encodage RES' a été sélectionné par l'équipement 30 suite à l'actualisation du fichier de résolution, l'équipement 30 envoie (étape E35) une requête vers l'équipement 41 contenant un indicateur relatif au nouveau débit d'encodage sélectionné RES' (typiquement une URL correspondant à ce nouveau débit d'encodage pour le segment Sj à transmettre) afin de déclencher l'envoi vers le terminal 10 du segment de données suivant Sj, encodé conformément à ce nouveau débit d'encodage RES' (étape E39), similairement aux étapes E25 et E29 précédentes.

En outre, toujours lorsqu'un nouveau débit d'encodage RES' est sélectionné, l'équipement 30 peut avantageusement déterminer une règle actualisée de qualité de service QoS' à appliquer, sur le canal support dédié à la livraison du contenu C1, aux segments Sj non encore transmis de ce contenu, lors d'un processus de mise à jour de la qualité de service, cette règle actualisée tenant compte du nouveau débit d'encodage à appliquer. Lorsque c'est le cas, l'équipement 30 transmet (étape E36) cette règle actualisée de qualité de service QoS' au nœud 25, afin de déclencher la modification du canal support dédié à la transmission du contenu C1 (étapes E37,E38), similairement aux étapes E26 à E28 précédentes.

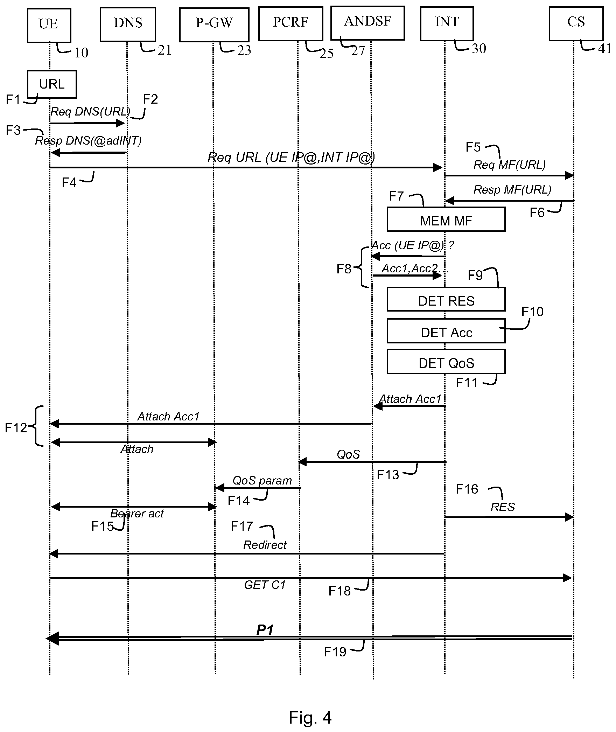

On se réfère maintenant à la **figure 4** qui illustre un procédé de transmission d'un contenu numérique vers un terminal mobile selon un deuxième mode de réalisation.

Dans ce deuxième mode de réalisation, on considère le cas particulier où le terminal 10 est attaché via un ou plusieurs réseaux d'accès à une passerelle d'accès réseau 23 d'un réseau cœur disposant en outre d'un serveur 27 mettant en œuvre une fonction de découverte et de sélection de réseau d'accès. C'est en particulier le cas lorsque la passerelle 23 est une passerelle P-GW appartenant à un réseau cœur 4G (EPC pour « Evolved Packet Core » en anglais) comprenant un serveur ANDSF, assimilable à un tel serveur 27 et permettant au terminal 10 de découvrir et de sélectionner des réseaux d'accès présents dans son contexte mais auxquels il n'est pas forcément attaché. Dans un tel contexte 4G, plusieurs liens réseaux transitant par différents réseaux d'accès peuvent être utilisés pour transmettre au terminal 10 des paquets appartenant à un même flux de données correspondant à une session média donnée, via la passerelle P-GW.

Dans ce deuxième mode de réalisation, on considère aussi que l'équipement de gestion 30 joue purement un rôle de signalisation et que, de ce fait, les paquets de données ne transitent pas via cet équipement 30, contrairement au mode de réalisation précédent.

On considère en outre que l'envoi vers le fournisseur/distributeur de contenus 40 de messages indiquant la résolution à utiliser ne s'effectue pas pour chaque segment de données à transmettre, comme c'est le cas pour le premier mode de réalisation, mais au début d'une session et/ou lors de l'occurrence d'un événement spécifique au niveau du réseau 20 ou au niveau du fournisseur/distributeur de contenus 40. En conséquence, la transmission du contenu C1 peut alors s'effectuer au moyen d'un flux de paquets de données P1,P2..., plutôt que par segments de données, ce qui est le cas illustré sur la figure 4.

Le déclenchement du procédé (étape F1), l'aiguillage de la requête de fourniture de contenu C1 du terminal mobile 10 vers l'équipement de gestion 30 au moyen d'un serveur de résolution d'adresse 21 (étapes F2-F4), ainsi que l'éventuelle obtention auprès d'un équipement 41 destiné à fournir le contenu C1 et la mémorisation du fichier de résolution MF (étapes F5-F7) sont similaires aux étapes E1 à E7 décrites précédemment.

Une fois qu'il dispose du fichier de résolution pour le contenu C1 requis, l'équipement 30 obtient (étape F8) des informations relatives aux bandes passantes disponibles sur les différents liens réseaux au moyen desquels le terminal mobile est attaché au réseau 20, dits « liens réseaux actif ». L'équipement 30 peut également avantageusement obtenir des informations relatives aux bandes passantes disponibles sur différents « liens réseaux potentiels », désignant ici des liens réseaux au moyen desquels le terminal mobile n'est pas attaché au réseau 20, mais se trouve dans un contexte où il pourrait l'être (par exemple parce que le terminal mobile se trouve sous la couverture d'un point d'accès d'un réseau d'accès, sans y être attaché). Ces différents liens réseaux, qu'ils soient effectivement en cours d'utilisation ou juste potentiellement utilisables, peuvent appartenir à des technologies d'accès différentes (3G,4G,Wifi, Wimax) ainsi qu'à des réseaux d'accès différents.

Pour ce faire, lorsque le réseau 20 comprend un serveur de découverte et de sélection de réseau d'accès 27 disposant, pour un terminal mobile donné, des informations de bande passante disponible pour tous les liens réseaux par lesquels le terminal est attaché au réseau 20, ainsi que pour les liens réseaux par lesquels il peut potentiellement s'attacher à ce réseau 20, l'entité 30 s'adresse à ce serveur 27 pour obtenir ces informations spécifiques au terminal 10, en lui envoyant une requête à laquelle le serveur 27 répond par un message comprenant ces informations.

Une fois qu'il dispose de ces informations de bande passante disponible, pour tous les liens réseaux actifs (voire aussi pour les liens réseaux potentiels) vers le terminal 10, l'équipement de gestion 30 sélectionne (étape F9), parmi les liens réseaux pour lesquels il a reçu des informations de bande passante disponible, le lien réseau disposant de la bande passante disponible la plus élevée.

Après avoir sélectionné un lien réseau, l'équipement de gestion 30 sélectionne (étape F10), parmi les débits d'encodage disponibles pour le contenu requis, un débit d'encodage RES correspondant au débit d'encodage le plus élevé qui soit inférieur à la bande passante disponible du lien sélectionné.

Ainsi, dans le cas de deux liens réseaux présentant des bandes passantes disponibles de 1000 et 2000 kb/s et d'un contenu proposé selon trois débits d'encodage disponibles de 512,1024 et 2048 kb/s, le lien réseau sélectionné est celui disposant d'une bande passante disponible de 2000 kb/s et le débit d'encodage sélectionné est de 1024 kb/s.

Si le terminal 10 est déjà attaché au lien réseau sélectionné, l'équipement de gestion 30 détermine (étape F11), en fonction du débit d'encodage RES sélectionné, une règle de qualité de service QoS à appliquer à ce lien réseau. L'équipement de gestion 30 transmet ensuite (étape F13) une requête comprenant cette règle de qualité de service QoS vers le nœud d'application de règles de qualité de service 25 du réseau 20, afin de déclencher l'envoi (étape F14), de ce nœud 25 à la passerelle d'accès réseau 23, d'un message comprenant des paramètres de qualité de service déduits à partir de la règle de qualité de service, comme expliqué précédemment, ces paramètres étant à appliquer au lien réseau sélectionné afin de réserver une bande passante compatible avec le débit d'encodage RES sur ce lien réseau.

Si, inversement, le lien réseau sélectionné est un lien réseau potentiel (i.e. un lien réseau non actif par lequel le terminal 10 n'est pas encore attaché au réseau 20, mais pourrait l'être), l'équipement de gestion 30 transmet, au serveur de découverte et de sélection de réseau d'accès 27, une requête d'instruction de déclenchement d'une procédure d'attachement se basant sur le lien réseau sélectionné entre le terminal mobile et une passerelle d'accès réseau 23 du réseau de communication, après avoir déterminé (étape F11), en fonction de ce débit d'encodage sélectionné, une règle de qualité de service QoS à appliquer à ce lien réseau. Suite à la réception de cette instruction, le serveur 27 transmet une requête d'attachement au terminal 10 afin que ce dernier s'attache à la passerelle 23 (étape F12). La règle de qualité de service QoS est également transmise au nœud 25 et utilisée conformément aux étapes F13 et F14 précédemment décrites, afin de déclencher l'activation d'un canal support (EPS bearer en anglais) dédié à la transmission des paquets sur le lien réseau sélectionné et nouvellement établi (étape F15).

Outre ces différentes étapes, lorsqu'il a sélectionné un débit d'encodage RES à appliquer, l'équipement de gestion 30 transmet (étape F16) un message comprenant ce débit d'encodage RES à l'équipement 41 du fournisseur/distributeur de contenus 40, afin de lui indiquer d'utiliser ce débit d'encodage sélectionné pour les paquets Pi à transmettre au terminal 10.

Ici, de manière alternative à ce qui a été proposé en figure 2, le message envoyé à l'équipement 41 est une requête de sélection de paquets de données encodés avec le débit d'encodage sélectionné, lorsque l'équipement 41 reçoit par la suite du terminal 10 une requête de transmission pour ces paquets de données. En d'autres termes, l'équipement 41 ne transmet pas directement les paquets au débit d'encodage sélectionné au terminal 10 après avoir reçu cette requête, mais attend de recevoir une requête émanant du terminal 10 pour le faire. L'équipement de gestion 30 transmet par ailleurs (étape F17) au terminal 10 un message lui instruisant de rediriger (étape F18) une requête de transmission de paquets de données du terminal mobile vers l'équipement 41. La réception de cette requête redirigée entraîne la transmission au terminal 10, par l'équipement 41, des paquets P1,... au débit d'encodage sélectionné (F19).

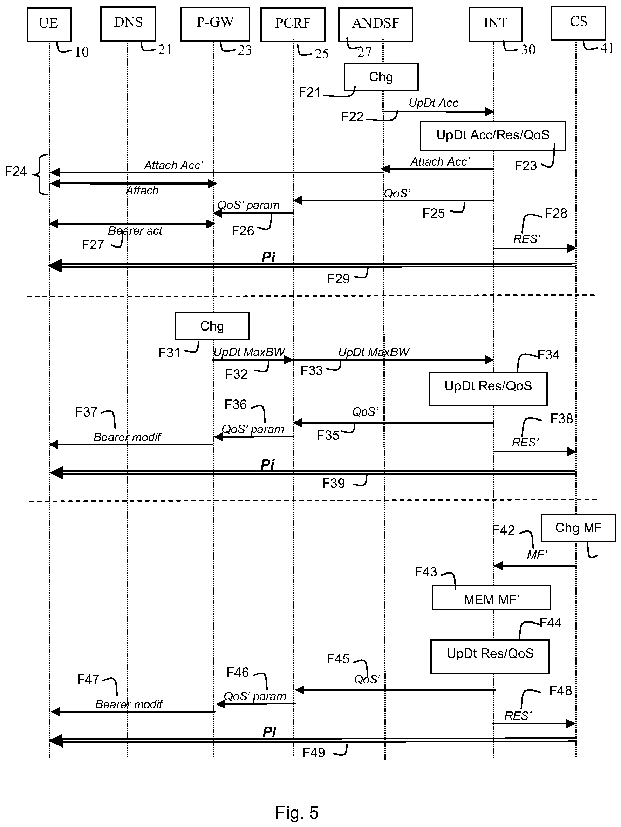

On se réfère maintenant à la **figure 5** qui illustre d'autres aspects du procédé de transmission de contenu numérique vers un terminal mobile selon le deuxième mode de réalisation.

On se place tout d'abord dans le cas où, certains paquets de données du contenu C1 ayant déjà été transmis au terminal 10, un événement a lieu au niveau du réseau 20 qui entraîne une modification au niveau des liens réseaux entre le terminal 10 et la passerelle 23 a eu lieu. Cette modification peut, par exemple, se manifester par l'apparition d'un nouvel accès dans le contexte du terminal 10, i.e. un nouveau lien réseau vers le terminal 10, via un nouveau réseau d'accès.

Cet événement est détecté par le serveur de découverte et de sélection de réseau d'accès 27 (étape F21), lequel détermine les liens réseaux disponibles dans le contexte où se trouve l'utilisateur du terminal 10 et transmet (étape F22) au nœud 25 un message de notification des bandes passantes disponibles sur ces différents liens.

Sur la base des informations reçues sur les bandes passante disponibles pour les différents liens réseaux disponibles, l'équipement 30 sélectionne (étape F23) le lien réseau présentant la bande passante disponible la plus élevée, ainsi qu'un débit d'encodage disponible le plus élevé qui soit inférieur à cette bande passante disponible, similairement aux étapes F9 et F10 discutées précédemment.

Si le lien réseau sélectionné reste le lien réseau utilisé précédemment pour transmettre des paquets de données du contenu C1, aucune modification de lien réseau n'a lieu, l'équipement de gestion 30 transmettant alors seulement à l'équipement 41 un débit d'encodage actualisé RES' lorsqu'il s'avère différent du débit RES utilisé auparavant.

Si le lien réseau sélectionné est un lien réseau actif, différent du lien réseau utilisé précédemment pour transmettre des paquets de données du contenu C1, par lequel le terminal 10 est déjà attaché à la passerelle 23, l'équipement 30 détermine en une règle de qualité de service actualisée QoS' et la transmet (étape F25) au nœud d'application de règles de qualité de service 25, afin que ce dernier en déduise des paramètres de qualité de service qu'il transmet (étape F26) à la passerelle d'accès réseau 23, pour que cette dernière déclenche l'activation d'un nouveau canal support (EPS bearer) dédié à la transmission de paquets de C1 (étape F27) sur le nouveau lien réseau sélectionné, ainsi que la réservation d'une bande passante compatible avec le débit d'encodage sélectionné sur ce nouveau lien.

Enfin, si le lien réseau sélectionné est un lien réseau potentiel par lequel le terminal 10 n'est pas encore attaché à la passerelle 23, l'équipement 30 instruit au serveur de découverte et de sélection de réseau d'accès 27 de déclencher un attachement entre le terminal 10 et une passerelle de réseau d'accès 23 au moyen de ce lien réseau sélectionné (étape F24). L'équipement 30 détermine en outre une règle de qualité de service actualisée QoS' et la transmet (étape F25) au nœud d'application de règles de qualité de service 25, afin que ce dernier en déduise des paramètres de qualité de service qu'il transmet (étape F26) à la passerelle d'accès réseau 23, pour que cette dernière déclenche l'activation d'un nouveau canal support (EPS bearer) dédié à la transmission de paquets de C1 (étape F27) sur le nouveau lien réseau sélectionné, ainsi que la réservation d'une bande passante compatible avec le débit d'encodage sélectionné sur ce nouveau lien.

L'équipement de gestion 30 peut alors transmettre (étape F28) une instruction indiquant à l'équipement 41 de transmettre (étape F29) les paquets Pi suivants du contenu C1, encodés selon le débit d'encodage actualisé RES', vers le terminal 10 via le nouveau lien réseau sélectionné.

Selon un deuxième aspect illustré en figure 5, un événement modifiant la bande passante du lien réseau utilisé pour transmettre les paquets du contenu C1 peut avoir lieu. Un tel événement est détecté (étape F31) par la passerelle d'accès réseau 23, laquelle notifie (étapes F32,F33) l'équipement 30 par l'intermédiaire de l'équipement 25, afin que l'équipement puisse déterminer (étape F34) une éventuelle actualisation du débit d'encodage RES à appliquer aux paquets suivants du contenu C1 (étapes F38,F39), ainsi que de la qualité de service QoS à appliquer au canal support dédié à la transmission de ce contenu (étapes F35-F37). Le cas échéant, si la modification de la bande passante du lien réseau utilisé aboutit à ce qu'un autre lien réseau par lequel le terminal 10 pourrait s'attacher au réseau 20 présente une meilleure bande passante disponible, une procédure d'attachement du terminal 10 au réseau 20 par cet autre lien réseau (non illustrée) peut être déclenchée, similairement aux étapes F12 ou F24.

Enfin, selon un troisième aspect illustré en figure 5, une modification du fichier de résolution MF peut avoir lieu comme discuté précédemment (étape F41), auquel cas un fichier MF' actualisé est transmis par l'équipement 41 à l'équipement 30 (étape F42) afin d'y être mémorisé (étape F43). L'équipement 30 peut alors déterminer (étape F44) une éventuelle actualisation du débit d'encodage RES à appliquer aux paquets suivants du contenu C1 (étapes F48,F49), ainsi que de la qualité de service QoS à appliquer au canal support dédié à la transmission de ce contenu (étapes F45-F47). Le cas échéant, si le retrait ou l'ajout d'un débit d'encodage dans le fichier MF' actualisé aboutit à ce qu'un autre lien réseau par lequel le terminal 10 pourrait s'attacher au réseau 20 est plus optimal par rapport aux débits d'encodage du fichier MF', une procédure d'attachement du terminal 10 au réseau 20 par cet autre lien réseau (non illustrée) peut être déclenchée, similairement aux étapes F12 ou F24.

On se réfère maintenant à la **figure 6** qui illustre l'équipement 30 de gestion de transmission d'un contenu numérique selon un mode de réalisation de l'invention.

Un tel équipement de gestion 30 comprend notamment :
- un module 30A de communication, agencé pour communiquer avec d'autres équipements du réseau 20 ou du fournisseur/distributeur de contenus 40.
- un module de traitement 30B, agencé d'une part pour recevoir des messages en provenance d'autres équipements, par l'intermédiaire du module 30A, et pour instruire au module 30A d'envoyer des messages vers d'autres équipements.

Le module de communication 30A est agencé pour obtenir, auprès d'un équipement du réseau 20, des information(s) relative(s) à la bande passante disponible sur un ou plusieurs lien(s) réseau(x) du réseau 20 vers le terminal mobile 10 et pour communiquer ces informations au module de traitement 30B. Il est également agencé pour envoyer, sur instruction du module de traitement 30B, à l'équipement 41 destiné à fournir un contenu numérique un message comprenant une indication relative au débit d'encodage RES sélectionné, ce message servant à instruire à cet équipement 41 d'utiliser ce débit d'encodage RES lorsqu'il envoie au terminal des paquets de données, encodés avec ce débit d'encodage RES, sur un des liens réseaux susmentionnés.

Le module de traitement 30B est configuré pour sélectionner, en fonction des informations relatives à la bande passante disponible sur un ou plusieurs lien(s) du réseau 20 vers le terminal mobile 10 obtenues par le module 30A, le débit d'encodage RES à appliquer à un ou plusieurs paquets de données à transmettre au terminal 10.

En d'autres termes, les modules 30A et 30B sont agencés pour mettre en œuvre le procédé précédemment décrit.

L'invention est mise en œuvre au moyen de composants logiciels et/ou matériels. Dans cette optique, le terme "module" peut correspondre dans ce document aussi bien à un composant logiciel qu'à un composant matériel, ou encore à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké dans une mémoire (désignée par MEM sur la figure 4), puis chargé et exécuté par un processeur de données (désignée par PROC sur la figure 4) de l'équipement 30, lequel est susceptible d'accéder aux ressources matérielles de cet équipement 30 (mémoires, supports d'enregistrement, bus de communication, cartes électroniques d'entrées/sorties, interfaces utilisateur, etc). De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Le module 30A est ainsi typiquement implémenté sous la forme d'un composant matériel, par exemple un modem, une carte réseau, voire un émetteur-récepteur optique, selon le type d'interface considérée entre l'équipement 30, le réseau 20 et l'équipement 41. Le module 30B est lui typiquement implémenté sous la forme d'un composant logiciel comprenant des instructions logicielles pour faire exécuter les étapes du procédé précédemment décrit, mises en œuvre par un équipement de gestion 30.

L'invention concerne donc aussi :
- un programme pour un tel équipement de gestion 30, comprenant des instructions de code de programme destinées à commander l'exécution des étapes du procédé précédemment décrit, lorsque ledit programme est exécuté par cet équipement de gestion 30;
- un support d'enregistrement, lisible par un tel équipement 30, sur lequel est enregistré le programme pour cet équipement.

Les modules logiciels peuvent être stockés dans ou transmis par un support de données. Celui-ci peut être un support matériel de stockage (par exemple un CD-ROM, une disquette magnétique ou un disque dur) ou bien un support de transmission tel qu'un signal électrique, optique ou radio, ou un réseau de télécommunication.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Ainsi, l'équipement 30 de gestion a été présenté comme étant un équipement tiers par rapport au réseau 20 d'un opérateur de télécommunications et au fournisseur/distributeur de contenus 40, donc localisé en dehors des domaines gérés par ceux-ci, afin de garantir un certain de degré de neutralité dans la gestion des informations recueillies de part et d'autre. Il est cependant également possible que cet équipement 30 soit un équipement appartenant au réseau 20, et donc soit géré directement par l'opérateur du réseau 20, ou alternativement qu'il appartienne au domaine du fournisseur ou distributeur de contenus 40, et donc soit géré par ce dernier, ce qui est approprié lorsque l'opérateur de télécommunications et le fournisseur de contenus forment une même entité ou ont un degré de confiance mutuelle élevé.

De plus, bien qu'une transmission du contenu par segments a été illustrée dans le premier mode de réalisation tandis qu'une transmission du contenu par flux de paquets a été illustrée dans le deuxième mode de réalisation, ces deux modes de transmission sont interchangeables et peuvent être utilisés dans les différents modes de réalisation de l'invention.

## Revendications

1. Procédé de transmission d'un contenu numérique, composé d'une pluralité de paquets de données, vers un terminal mobile (10) au travers d'un réseau de communication (20), le procédé comprenant les étapes suivantes mises en œuvre par un équipement de gestion (30) :
obtenir (E11,E23,F8,F33), auprès d'un nœud d'application de règles de qualité de service (25) du réseau de communication, au moins une information relative à la bande passante disponible sur au moins un lien réseau au moyen duquel le terminal est attaché au réseau de communication ;
sélectionner (E12,E24,F10,F34), en fonction de ladite information relative à la bande passante, un débit d'encodage (RES) à utiliser pour au moins un desdits paquets de données ; et
envoyer (E14,E25,F16,F38), à un équipement destiné à fournir le contenu numérique (41), un message indiquant le débit d'encodage sélectionné, afin d'instruire audit équipement destiné à fournir le contenu numérique (41) de transmettre au terminal mobile au moins un desdits paquets de données, encodé avec le débit d'encodage sélectionné, sur un desdits liens réseaux.

2. Procédé selon la revendication 1, comprenant en outre :
déterminer (E13,F11), en fonction du débit d'encodage sélectionné, une règle de qualité de service à appliquer au lien réseau sur lequel le au moins un paquet de données encodé avec le débit d'encodage sélectionné est à transmettre ; et
envoyer (E15,F13) la règle de qualité de service vers un nœud d'application de règles de qualité de service (25) du réseau de communication, afin de déclencher l'envoi (E16,F14), du nœud d'application de règles de qualité de service (25) à une passerelle d'accès réseau (23), d'au moins un paramètre de qualité de service, déduit à partir de la règle de qualité de service, à appliquer au lien réseau sur lequel le au moins un paquet de données encodé avec le débit d'encodage sélectionné est à transmettre.

3. Procédé selon la revendication 1 ou 2, dans lequel ledit au moins un paquet encodé avec le débit d'encodage sélectionné est un segment de données (S1) du contenu numérique comprenant le premier paquet dudit contenu, les étapes du procédé étant mises en œuvre par l'équipement de gestion (30) suite à la réception (E4,F4) d'une requête de fourniture du contenu provenant du terminal mobile.

4. Procédé selon l'une des revendications 1 à 3, comprenant en outre l'obtention (E6,E32,F6,F42) par l'équipement de gestion (30) d'un fichier de résolution (MF) auprès de l'équipement destiné à fournir le contenu numérique (41), le fichier de résolution indiquant une pluralité de débits d'encodage disponibles pour les paquets du contenu numérique, le débit d'encodage (RES) à utiliser étant sélectionné parmi la pluralité de débits d'encodage disponibles.

5. Procédé selon l'une des revendications 1 à 4, dans lequel :
l'étape d'obtention consiste à obtenir (F8), auprès d'un serveur de découverte et de sélection de réseau d'accès (27) du réseau de communication, une pluralité d'informations relatives aux bandes passantes disponibles pour une pluralité de liens réseaux du réseau (20) vers le terminal (10),
le procédé comprend en outre la sélection (F9), parmi lesdits liens réseaux, du lien réseau présentant la bande passante disponible la plus élevée, et
l'étape de sélection du débit d'encodage (F10) consiste à sélectionner, parmi un ensemble de débits d'encodage disponibles pour le contenu numérique, le débit d'encodage le plus élevé qui soit inférieur à la bande passante disponible du lien réseau sélectionné.

6. Procédé selon la revendication 5, dans lequel, lorsque le lien réseau sélectionné est un lien réseau au moyen duquel le terminal mobile n'est pas attaché au réseau mobile, le procédé comprend en outre l'envoi (F12), au serveur de découverte et de sélection de réseau d'accès (27), d'une instruction de déclenchement d'une procédure d'attachement au moyen du lien réseau sélectionné entre le terminal mobile et une passerelle d'accès réseau (23) du réseau de communication.

7. Procédé selon l'une des revendications 1 à 6, dans lequel le message envoyé à l'équipement destiné à fournir le contenu numérique (41) est une requête d'envoi au terminal mobile d'au moins un desdits paquets de données, encodé avec le débit d'encodage sélectionné, sur un desdits liens réseaux.

8. Procédé selon l'une des revendications 1 à 6, dans lequel le message envoyé à l'équipement destiné à fournir le contenu numérique (41) est une requête de sélection d'au moins un paquet de données encodé avec le débit d'encodage sélectionné lorsque l'équipement destiné à fournir le contenu numérique (41) reçoit (F18) du terminal mobile une requête de transmission dudit paquet de données, le procédé comprenant en outre l'envoi (F17), de l'équipement de gestion (30) au terminal mobile, d'un message instruisant de rediriger une requête de transmission de paquets de données du terminal mobile vers l'équipement destiné à fournir le contenu numérique (41).

9. Equipement de gestion (30) de transmission d'un contenu numérique composé d'une pluralité de paquets de données vers un terminal mobile (10), au travers d'un réseau de communication (20), comprenant :
des moyens de communication (30A) aptes à obtenir (E11,F8), auprès d'un nœud d'application de règles de qualité de service (25) du réseau de communication, au moins une information relative à la bande passante disponible sur au moins un lien réseau au moyen duquel le terminal est attaché au réseau de communication, et configurés pour envoyer (E14,F16), à un équipement destiné à fournir le contenu numérique (41), un message indiquant un débit d'encodage à utiliser pour au moins un desdits paquets de données, afin d'instruire audit équipement destiné à fournir le contenu numérique (41) de transmettre au terminal mobile au moins un desdits paquets de données, encodé avec le débit d'encodage sélectionné, sur un desdits liens réseaux ; et
des moyens de traitement (30B) configurés pour sélectionner (E12,F10), en fonction de ladite information relative à la bande passante, le débit d'encodage (RES) à utiliser pour ledit au moins un paquet de données.

10. Programme d'ordinateur comprenant des instructions de code destinées à la mise en œuvre des étapes du procédé selon l'une des revendications 1 à 8, lorsque ledit programme d'ordinateur est exécuté par les moyens de traitement d'un équipement (30) de gestion de transmission d'un contenu numérique.

11. Support d'enregistrement, lisible par un équipement (30) de gestion de transmission d'un contenu numérique, sur lequel est enregistré le programme d'ordinateur selon la revendication 10.

## Patentansprüche

1. Verfahren zur Übertragung eines digitalen Inhalts, der aus einer Mehrzahl von Datenpaketen besteht, über ein Kommunikationsnetzwerk (20) zu einem mobilen Endgerät (10), wobei das Verfahren die folgenden, von einer Verwaltungseinrichtung (30) ausgeführten Schritte umfasst:
Erhalten (E11, E23, F8, F33) mindestens einer Information bezüglich der verfügbaren Bandbreite bei einem Dienstgüterichtlinien-Anwendungsknoten (25) des Kommunikationsnetzwerks über mindestens eine Netzwerkverbindung, mittels der das Endgerät bei dem Kommunikationsnetzwerk angemeldet ist;
Wählen (E12, E24, F10, F34) einer Codierungsbitrate (RES), die für mindestens eines der Datenpakete zu verwenden ist, in Abhängigkeit von der Information bezüglich der Bandbreite; und
Senden (E14, E25, F16, F38) einer Nachricht, welche die gewählte Codierungsbitrate angibt, an eine zur Bereitstellung des digitalen Inhalts bestimmte Einrichtung (41), um die zur Bereitstellung des digitalen Inhalts bestimmte Einrichtung (41) anzuweisen, an das mobile Endgerät mindestens eines der Datenpakete, das mit der gewählten Codierungsbitrate codiert ist, über eine der Netzwerkverbindungen zu übertragen.

2. Verfahren nach Anspruch 1, umfassend ferner:
Bestimmen (E13, F11) einer Dienstgüterichtlinie, die auf die Netzwerkverbindung anzuwenden ist, über die das mindestens eine mit der gewählten Codierungsbitrate codierte Datenpaket zu übertragen ist, in Abhängigkeit von der gewählten Codierungsbitrate; und
Senden (E15, F13) der Dienstgüterichtlinie an einen Dienstgüterichtlinien-Anwendungsknoten (25) des Kommunikationsnetzwerks, um das Senden (E16, F14) mindestens eines anhand der Dienstgüterichtlinie abgeleiteten Dienstgüteparameters, der auf die Netzwerkverbindung anzuwenden ist, über die das mindestens eine mit der gewählten Codierungsbitrate codierte Datenpaket zu übertragen ist, vom Dienstgüterichtlinien-Anwendungsknoten (25) an ein Netzzugangsgateway (23) auszulösen.

3. Verfahren nach Anspruch 1 oder 2, bei dem das mindestens eine mit der gewählten Codierungsbitrate codierte Paket ein Datensegment (S1) des digitalen Inhalts ist, welches das erste Paket des Inhalts umfasst, wobei die Schritte des Verfahrens von der Verwaltungseinrichtung (30) nach dem Empfangen (E4, F4) einer vom mobilen Endgerät kommenden Anforderung der Bereitstellung des Inhalts ausgeführt werden.

4. Verfahren nach einem der Ansprüche 1 bis 3, umfassend ferner das Erhalten (E6, E32, F6, F42) einer Auflösungsdatei (MF) bei der zur Bereitstellung des digitalen Inhalts bestimmten Einrichtung (41) durch die Verwaltungseinrichtung (30), wobei die Auflösungsdatei eine Mehrzahl von verfügbaren Codierungsbitraten für die Pakete des digitalen Inhalts angibt, wobei die zu verwendende Codierungsbitrate (RES) unter der Mehrzahl von verfügbaren Codierungsbitraten gewählt wird.

5. Verfahren nach einem der Ansprüche 1 bis 4, bei dem:
der Schritt des Erhaltens darin besteht, bei einem Server zur Zugangsnetzerkennung und -auswahl (27) des Kommunikationsnetzwerks eine Mehrzahl von Informationen über die verfügbaren Bandbreiten für eine Mehrzahl von Netzwerkverbindungen des Netzwerks (20) zum Endgerät (10) zu erhalten (F8),
das Verfahren ferner das Wählen (F9) derjenigen Netzwerkverbindung unter den Netzwerkverbindungen umfasst, welche die höchste verfügbare Bandbreite aufweist, und
der Schritt des Wählens der Codierungsbitrate (F10) darin besteht, unter einem Satz von verfügbaren Codierungsbitraten für den digitalen Inhalt die höchste Codierungsbitrate zu wählen, die geringer als die verfügbare Bandbreite der gewählten Netzwerkverbindung ist.

6. Verfahren nach Anspruch 5, bei dem das Verfahren, wenn die gewählte Netzwerkverbindung eine Netzwerkverbindung ist, über die das Mobilfunkendgerät nicht beim Mobilfunknetz angemeldet ist, ferner das Senden (F12) einer Anweisung zum Auslösen eines Anmeldeverfahrens mittels der gewählten Netzwerkverbindung zwischen dem mobilen Endgerät und einem Netzzugangsgateway (23) des Kommunikationsnetzwerks an den Server zur Zugangsnetzerkennung und -auswahl (27) umfasst.

7. Verfahren nach einem der Ansprüche 1 bis 6, bei dem die Nachricht, die an die zur Bereitstellung des digitalen Inhalts bestimmte Einrichtung (41) gesendet wird, eine Anforderung des Sendens mindestens eines der Datenpakete, das mit der gewählten Codierungsbitrate codiert ist, über eine der Netzwerkverbindungen an das mobile Endgerät ist.

8. Verfahren nach einem der Ansprüche 1 bis 6, bei dem die Nachricht, die an die zur Bereitstellung des digitalen Inhalts bestimmte Einrichtung (41) gesendet wird, eine Anforderung des Wählens mindestens eines mit der gewählten Codierungsbitrate codierten Datenpakets ist, wenn die zur Bereitstellung des digitalen Inhalts bestimmte Einrichtung (41) vom mobilen Endgerät eine Anforderung der Übertragung des Datenpakets empfängt (F18), wobei das Verfahren ferner das Senden (F17) einer Nachricht, die anweist, eine Anforderung der Übertragung von Datenpaketen vom mobilen Endgerät an die zur Bereitstellung des digitalen Inhalts bestimmte Einrichtung (41) umzuleiten, von der Verwaltungseinrichtung (30) an das mobile Endgerät umfasst.

9. Einrichtung zur Verwaltung (30) der Übertragung eines digitalen Inhalts, der aus einer Mehrzahl von Datenpaketen besteht, über ein Kommunikationsnetzwerk (20) zu einem mobilen Endgerät (10), umfassend:
Kommunikationsmittel (30A), die geeignet sind, bei einem Dienstgüterichtlinien-Anwendungsknoten (25) des Kommunikationsnetzwerks mindestens eine Information bezüglich der verfügbaren Bandbreite über mindestens eine Netzwerkverbindung zu erhalten (E11, F8), mittels der das Endgerät bei dem Kommunikationsnetzwerk angemeldet ist, und die dazu ausgestaltet sind, an eine zur Bereitstellung des digitalen Inhalts bestimmte Einrichtung (41) eine Nachricht zu senden (E14, F16), die eine Codierungsbitrate angibt, die für mindestens eines der Datenpakete zu verwenden ist, um die zur Bereitstellung des digitalen Inhalts bestimmte Einrichtung (41) anzuweisen, an das mobile Endgerät mindestens eines der Datenpakete, das mit der gewählten Codierungsbitrate codiert ist, über eine der Netzwerkverbindungen zu übertragen; und
Verarbeitungsmittel (30B), die dazu ausgestaltet sind, in Abhängigkeit von der Information bezüglich der Bandbreite die Codierungsbitrate (RES) zu wählen (E12, F10), die für das mindestens eine Datenpaket zu verwenden ist.

10. Computerprogramm, das Codeanweisungen umfasst, die dazu bestimmt sind, Schritte des Verfahrens nach einem der Ansprüche 1 bis 8 auszuführen, wenn das Computerprogramm von den Verarbeitungsmitteln einer Einrichtung (30) zur Verwaltung der Übertragung eines digitalen Inhalts ausgeführt wird.

11. Speichermedium, das von einer Einrichtung (30) zur Verwaltung der Übertragung eines digitalen Inhalts gelesen werden kann, auf dem das Computerprogramm nach Anspruch 10 gespeichert ist.

## Claims

1. Method for transmitting a digital content, composed of a plurality of data packets, to a mobile terminal (10) via a communication network (20), the method comprising the following steps implemented by a management device (30):
obtaining (E11,E23,F8,F33), from a node for applying quality of service rules (25) of the communication network, at least one piece of information relating to the available bandwidth on at least one network link by means of which the terminal is attached to the communication network;
selecting (E12,E24,F10,F34), on the basis of said piece of information relating to the bandwidth, an encoding bit rate (RES) to be used for at least one of said data packets; and
sending (E14,E25,F16,F38), to a device intended to provide the digital content (41), a message indicating the selected encoding bit rate, so as to instruct said device intended to provide the digital content (41) to transmit to the mobile terminal at least one of said data packets, encoded using the selected encoding bit rate, on one of said network links.

2. Method according to Claim 1, further comprising:
determining (E13,F11), on the basis of the selected encoding bit rate, a quality of service rule to be applied to the network link on which the at least one data packet encoded using the selected encoding bit rate is to be transmitted; and
sending (E15,F13) the quality of service rule to a node for applying quality of service rules (25) of the communication network, so as to trigger the sending (E16,F14), from the node for applying quality of service rules (25) to a network access gateway (23), of at least one quality of service parameter, deduced from the quality of service rule, to be applied to the network link on which the at least one data packet encoded using the selected encoding bit rate is to be transmitted.

3. Method according to Claim 1 or 2, in which said at least one packet encoded using the selected encoding bit rate is a data segment (S1) of the digital content comprising the first packet of said content, the steps of the method being implemented by the management device (30) following reception (E4,F4) of a request to provide the content from the mobile terminal.

4. Method according to one of Claims 1 to 3, further comprising the management device (30) obtaining (E6,E32,F6,F42) a resolution file (MF) from the device intended to provide the digital content (41), the resolution file indicating a plurality of available encoding bit rates for the packets of the digital content, the encoding bit rate (RES) to be used being selected from among the plurality of available encoding bit rates.

5. Method according to one of Claims 1 to 4, in which:
the obtainment step consists in obtaining (F8), from an access network discovery and selection server (27) of the communication network, a plurality of pieces of information relating to the available bandwidths for a plurality of network links from the network (20) to the terminal (10),
the method further comprises the selection (F9), from among said network links, of the network link having the highest available bandwidth, and
the step of selection of the encoding bit rate (F10) consists in selecting, from among a set of available encoding bit rates for the digital content, the highest encoding bit rate that is lower than the available bandwidth of the selected network link.

6. Method according to Claim 5, in which, when the selected network link is a network link by means of which the mobile terminal is not attached to the mobile network, the method further comprises the sending (F12), to the access network discovery and selection server (27), of an instruction for triggering an attachment procedure by means of the selected network link between the mobile terminal and a network access gateway (23) of the communication network.

7. Method according to one of Claims 1 to 6, in which the message sent to the device intended to provide the digital content (41) is a request to send to the mobile terminal at least one of said data packets, encoded using the selected encoding bit rate, on one of said network links.

8. Method according to one of Claims 1 to 6, in which the message sent to the device intended to provide the digital content (41) is a request to select at least one data packet encoded using the selected encoding bit rate when the device intended to provide the digital content (41) receives (F18) from the mobile terminal a request to transmit said data packet, the method further comprising the sending (F17), from the management device (30) to the mobile terminal, of a message providing instruction to redirect a request to transmit data packets from the mobile terminal to the device intended to provide the digital content (41).

9. Management device (30) for managing transmission of a digital content composed of a plurality of data packets to a mobile terminal (10), via a communication network (20), comprising:
communication means (30A) that are capable of obtaining (E11,F8), from a node for applying quality of service rules (25) of the communication network, at least one piece of information relating to the available bandwidth on at least one network link by means of which the terminal is attached to the communication network, and that are configured to send (E14,F16), to a device intended to provide the digital content (41), a message indicating an encoding bit rate to be used for at least one of said data packets, so as to instruct said device intended to provide the digital content (41) to transmit to the mobile terminal at least one of said data packets, encoded using the selected encoding bit rate, on one of said network links; and
processing means (30B) that are configured to select (E12,F10), on the basis of said piece of information relating to the bandwidth, the encoding bit rate (RES) to be used for said at least one data packet.

10. Computer program comprising code instructions intended for implementation of the steps of the method according to one of Claims 1 to 8 when said computer program is executed by the processing means of a device (30) for managing transmission of a digital content.

11. Recording medium, readable by a device (30) for managing transmission of a digital content, on which is recorded the computer program according to Claim 10.
